**Europäisches Patentamt**

**European Patent Office**

**Office européen des brevets**

(19)

(11) Veröffentlichungsnummer: **0 012 915**
**B1**

(12)
# EUROPÄISCHE PATENTSCHRIFT

(45) Veröffentlichungstag der Patentschrift:
16.05.84

(21) Anmeldenummer: 79105069.3

(22) Anmeldetag: 10.12.79

(86) Internationale Anmeldenummer:
PCT/UR /

(51) Int. Cl.³: **G 21 C 3/62**

(54) **Verfahren zur Herstellung von oxidischen Kernbrennstoffkörpern.**

(30) Priorität: 20.12.78 DE 2855166

(43) Veröffentlichungstag der Anmeldung:
09.07.80 Patentblatt 80/14

(45) Bekanntmachung des Hinweises auf die Patenterteilung:
16.05.84 Patentblatt 84/20

(84) Benannte Vertragsstaaten:
BE DE FR GB IT SE

(56) Entgegenhaltungen:
DE - A - 2 115 694
FR - A - 1 228 590
US - A - 3 094 377
US - A - 3 258 317
US - A - 4 052 330

**Die Akte enthält technische Angaben, die nach dem Eingang der Anmeldung eingereicht wurden und die nicht in dieser Patentschrift enthalten sind.**

(73) Patentinhaber: **KRAFTWERK UNION AKTIENGESELLSCHAFT, Wiesenstrasse 35, D-4330 Mülheim (Ruhr) (DE)**
Patentinhaber: **REAKTOR-BRENNELEMENT UNION GmbH, Postfach 11 00 60, D-6450 Hanau 11 (DE)**

(72) Erfinder: **Assmann, Helmut, Dr., Schwabachstrasse 13, D-8521 Dormitz (DE)**
Erfinder: **Brandau, Egbert, Dr., Schulstrasse 20, D-6440 Bebra (DE)**
Erfinder: **Dörr, Wolfgang, Dr., Lippsweg 2, D-8520 Erlangen (DE)**
Erfinder: **Mathieu, Viktor, Bergstrasse 32, D-6451 Neuberg (DE)**
Erfinder: **Dichtjar, Gerhard, Rothenberger Strasse 17, D-6456 Langenselbold (DE)**

(74) Vertreter: **Mehl, Ernst, Dipl.-Ing., Postfach 22 01 76, D-8000 München 22 (DE)**

**0 012 915**

Verfahren zum Herstellen von oxidischen Kernbrennstoffkörpern

Die Erfindung besteht aus einem Verfahren zum Herstellen von oxidischen Kernbrennstoffkörpern mit einem Sauerstoff zu Metallverhältnis von 2,0 ± 0,02 durch Versetzen und Vermischen von Kernbrennstoffpulver mit beliebigem Sauerstoff zu Metallverhältnis mit kornwachstumsfördernd wirkenden und Mikrostruktur einstellenden, aus $U_3O_8$ bestehenden Sinterzusätzen, Verpressen dieses Gemisches zu Grünlingen, Transportieren dieser Grünlinge durch einen Durchlaufsinterofen, in dem diese in einer aus technisch reinem Kohlendioxid bestehenden Sinteratmosphäre bei einer Sintertemperatur im Bereich zwischen 1000°C und 1400°C gesintert und anschließend in einer reduzierend wirkenden Gasatmosphäre behandelt werden.

Der Erfindung liegt die Aufgabe zugrunde, das Herstellen von oxidischen Kernbrennstoffkörpern zu ermöglichen, die in einem weitgehend verringerten Umfang gasförmige Kernspaltprodukte während der Kernspaltvorgänge in einem im Betrieb befindlichen Kernreaktor freisetzen, so daß mit den oxidischen Kernbrennstoffkörpern gefüllte Brennstäbe einen sehr viel kleineren Brennstabinnendruck entwickeln und deshalb ein günstiges Störfallverhalten in einem im Betrieb befindlichen Kernreaktor zeigen.

Nach der US-A-40 52 330 werden zur Beseitigung von unerwünschten Verunreinigungen, insbesondere von Fluoriden, aus Uranoxiden die Grünlinge in einem Durchlaufsinterofen zunächst etwa 60 Minuten lang bei einer Temperatur etwa im Bereich von 600°C—900°C in einer reduzierend wirkenden Gasatmosphäre vorgeheizt, die mindestens 10% Wasserstoff und den Rest Kohlendioxid enthält. Die Grünlinge werden sodann zur Verdichtung einem Sinterschritt bei einer Temperatur etwa im Bereich von 900°C—1500°C in einer Gasatmosphäre unterworfen, die mindestens $^1/_2$% Wasserstoff und den Rest Kohlendioxid und gegebenenfalls Wasserdampf enthält. Schließlich werden die gebildeten Sinterkörper noch einem Reduktionsschritt bei einer Temperatur von etwa 1100°C unterzogen, der in einer Gasatmosphäre stattfindet, die mindestens 10% Wasserstoff und den Rest Kohlendioxid enthält. Infolge des Wasserstoffgehaltes in der Gasatmosphäre beim Vorheizen und Sintern werden die Uranoxide reduziert. Es hat sich herausgestellt, daß deshalb Kornwachstum überhaupt nicht gefördert und die Verdichtungsrate verringert wird.

In Weiterbildung der Erfindung wird das aus technisch reinem Kohlendioxid bestehende oxidierende Gas in gleicher Richtung wie die Grünlinge durch den Ofenraum des Durchlaufsinterofens geführt.

Von Vorteil ist es ferner, wenn die reduzierend wirkende Gasatmosphäre aus Wasserstoff besteht, evtl. vermischt mit einem neutralen Gas wie Stickstoff, gegen die Bewegungsrichtung der Grünlinge durch den Durchlaufsinterofen geleitet und zur Einstellung des Restfluorgehaltes mit einem entsprechenden Feuchtigkeitsgehalt versehen wird.

Vorteilhafterweise werden im Sinterofen die Oxidationszone und die Reduktionszone durch einen Stickstoffstrom voneinander getrennt, in dem auch das oxidierende und das reduzierende Gas abgeführt werden.

Dieses Verfahren kann also als ein Zweistufen-Verfahren bezeichnet werden und besteht aus einem oxidativen Sinterschritt in einer Kohlendioxidatmosphäre und einem Reduktionsschritt in einer wasserstoffhaltigen Atmosphäre. Beide Schritte werden in einem einzigen Sinterofen durchgeführt. Dieser enthält zwei Zonen, nämlich die Sinterzone und die Reduktionszone, beide sind durch eine Gasschleuse getrennt, die dabei auch der Abführung der beiden Gase dient. Die Mikrostruktur der auf diese Weise bei niedrigen Temperaturen von 1000—1400°C hergestellten Sinterkörper besteht aus feineren Körnern und gröberen Körnern, die homogen verteilt sind. Dies wird durch Zugabe von noch zu besprechenden Sinterzusätzen erreicht.

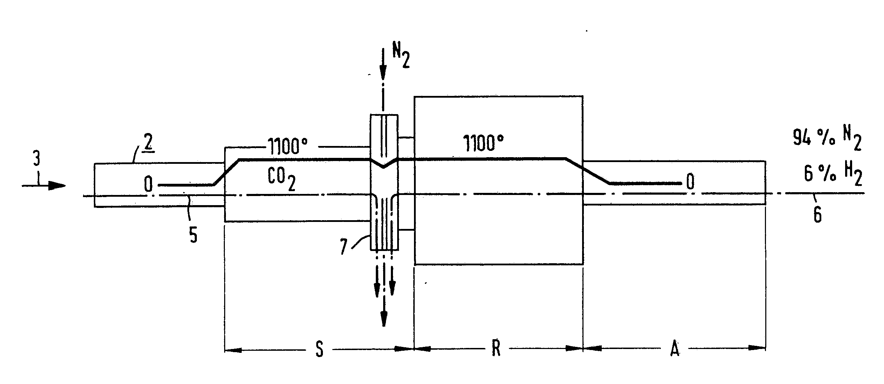

Anhand der Figur sei nun das erfindungsgemäße Verfahren näher beschrieben.

Die Figur zeigt einen Niedrigtemperatur-Sinterofen in schematischer Darstellung zur Durchführung des erfindungsgemäßen Verfahrens. Dieser Ofen ist mit 2 bezeichnet, durch den Pfeil 3 ist die Einschubrichtung des Sintergutes angegeben, dieses gelangt zunächst in die Sinterzone S mit einer Temperatur von 1100°C und wird dabei in gleicher Richtung vom $CO_2$-Gas 5 umströmt. Dieses wird durch die anschließende Schleuse 7, die zudem noch von einem Stickstoffstrom gespült wird, abgeführt. Das Sintergut gelangt sodann durch die Schleuse hindurch in die Reduktionszone R, in der die gleiche Temperatur von 1100°C herrscht und anschließend in die Abkühlzone A. Ein reduzierendes Gas 6, das beispielsweise aus 94% Stickstoff und 6% Wasserstoff besteht, strömt entgegen der Bewegungsrichtung des Sintergutes durch die Zonen A und R und wird ebenfalls durch die Schleuse 7 abgeführt. Durch die Verwendung von Kohlendioxid technischer Reinheit wird eine für den Sintervorgang bei Temperaturen ab 1000°C erforderliche Überstöchiometrie eingestellt. Diese stellt sich bereits beim Aufheizen der aus Oxidpulvern gepreßten Formkörper ein, bleibt während des Sinterns konstant und ist völlig unabhängig vom Ausgangssauerstoff zum Metallverhältnis des verwendeten Metallpulvers. Dabei wird eine hohe Sinterdichte erreicht, die ≥94% der theoretischen Dichte ist und bereits nach sehr kurzen Sinterzeiten erreicht wird.

Die nachstehende Tabelle zeigt den Zusammenhang zwischen Sinterzeit und der Sintertemperatur nach diesem Verfahren auf:

| Sinterzeit | Sintertemperatur |
|---|---|
| 30 min | 1000° C |
| 20 min | 1100° C |
| 10 min | 1200° C |
| 10 min | 1300° C |
| 5 min | 1400° C |

Längere Sinterzeiten bzw. höhere Temperaturen erhöhen die Sinterdichte nur unwesentlich und können deshalb zur Einstellung der Mikrostrukturgrößen verwendet werden. In der Reduktionszone R werden Wasserstoff, Wasserstoff-Inertgas oder Wasserstoffstickstoffmischungen jeweils trocken oder angefeuchtet verwendet. Dabei sind, wie in der Figur dargestellt, Gasgemische mit nur 6 Vol.-% Wasserstoff ausreichend, um bei den angegebenen Sintertemperaturen nach 30 Minuten ein Sauerstoff zu Metallverhältnis von 2,0 ± 0,02 zu erhalten. Das Anfeuchten des Reduktionsgases führt zu niedrigeren Fluorgehalten in den Sinterkörpern. Diese liegen dabei sicher unter 10 ppm.

Auch bei diesem Verfahren werden Mikrostrukturgrößen erreicht, wie sie beim Hochtemperaturverfahren optimiert worden sind. Die erwünschten Poren im Bereich von 1—10 µm werden durch Zugabe von $U_3O_8$ erzeugt. Die mittlere Korngröße beträgt je nach Sintertemperatur und -zeit 4—10 µm. Die gesteuerte Einstellung dieser Mikrostruktur über die $U_3O_8$-Zugabe ergibt eine Matrixkorngröße von etwa 2 µm, in der eine Kornfraktion von 20—50 µm eingebettet ist. Diese bimodale Kornstruktur zeigt eine bessere Plastizität, da die Feinkornbereiche das Skelett der Sinterkörper bilden und die mechanische Belastung aufnehmen. Weiterhin wird die Spaltgasfreisetzung während des Reaktorbetriebes durch die groben und sehr wachstumsstabilen Körper erniedrigt. Diese Kornstruktur bildet somit einen optimalen Kompromiß bezüglich der Brennstoffeigenschaften Plastizität und Spaltgasrückhaltevermögen.

Die erwähnte Zugabe von bis zu 25% $U_3O_8$ ermöglicht die Verwendung von trocken aufgearbeitetem Fertigungsrücklauf aus der Tablettenherstellung, der durch Verglühen zu $U_3O_8$ umgewandelt wird. Auf diese Weise gelingt es, den Kernbrennstoffschrott wieder in die Fertigung zurückzuführen und gleichzeitig damit die Mikrostruktur, wie bereits erwähnt, einzustellen. Diese $U_3O_8$-Zusätze bleiben während des Sinterns stabil und werden erst beim Reduzierschritt zu $UO_2$ umgewandelt. Dadurch wirkt dieser Zusatz porenbildend und damit dichteerniedrigend. Diese Dichteerniedrigung ist der Menge an $U_3O_8$-Zusatz (aus Schrott gewonnen) direkt proportional.

Aus diesen Ausführungen ist ersichtlich, daß trotz wesentlich geringerer Temperaturen gegenüber bisherigen Hochtemperatursinterverfahren gleichwertige Erzeugnisse erhalten werden. Die geringeren Temperaturen aber ermöglichen wesentlich niedrigere Ofenheizleistungen, außerdem ist der Verschleiß der Materialien wesentlich geringer, was sich besonders günstig in den Betriebskosten niederschlägt. Diese werden auch durch die verwendeten Schutzgase im Vergleich zu reinen Reduktionsgasen günstig beeinflußt.

Abschließend seien die mit diesem Verfahren erzielten Ergebnisse anhand nachfolgender Ausführungsbeispiele dargestellt.

Die Herstellung der Preßkörper erfolgte jeweils durch direktes Verpressen von $UO_2$-Pulver oder Pulvermischungen von $UO_2$ mit Gadoliniumoxid oder mit $PuO_2$. Das verwendete $UO_2$-Pulver hatte dabei folgende Pulverdaten:

| | |
|---|---|
| Spezifische Oberfläche | 5—6 m²/g |
| Schüttdichte ca. | 2 g/cm³ |
| Mittlere Partikelgröße | 6 µm |

Den Pulvern oder Pulvermischungen wurden keinerlei Gleitmittel, keine Bindemittel und keine Porenbildner zugesetzt. Einziger Zusatz war zu $U_3O_8$-Pulver verglühter Sinterrücklauf. Die Grünlingsdichte betrug jeweils 5,6 g/cm³.

Die jeweils verwendeten Pulverzusammensetzungen, Sinterbedingungen und Pelleteigenschaften sind aus den Einzelbeispielen der nachfolgenden Tabelle zu entnehmen.

**0 012 915**

|  | Beispiel 1 | Beispiel 2 |
|---|---|---|
| Pulverzusammensetzung | 100% $UO_2$ | 100% $UO_2$ |
| Pulver O/U | 2.11 | 2.08 |
| $U_3O_8$-Zusatz | 10% | 8% |
| Sintergas | $CO_2$ | $CO_2$ |
| Sintertemperatur | 1100° C | 1100° C |
| Sinterzeit | 1 h | 2 h |
| Reduktionsgas | $H_2$ | 94% $N_2$/6% $H_2$ |
| Reduktionstemperatur | 1100° C | 1100° C |
| Reduktionszeit | 15 min | 2 h |
| Tabletteneigenschaften: | | |
| Sinterdichte ($g/cm^3$) | 10.32 | x = 10.44 |
| % theoret. Dichte | 94,2 | 95 |
| Fluor | <5 ppm | 3 ppm |
| O/U | 2.00 | 2.00 |

**Patentansprüche**

1. Verfahren zum Herstellen von oxidischen Kernbrennstoffkörpern mit einem Sauerstoff zu Metallverhältnis von 2,0 ± 0,02 durch Versetzen und Vermischen von Kernbrennstoffpulver mit beliebigem Sauerstoff zu Metallverhältnis mit kornwachstumsfördernd wirkenden und Mikrostruktur einstellenden, aus $U_3O_8$ bestehenden Sinterzusätzen, Verpressen dieses Gemisches zu Grünlingen, Transportieren dieser Grünlinge durch einen Durchlaufsinterofen, in dem diese in einer aus technisch reinem Kohlendioxid bestehenden Sinteratmosphäre bei einer Sintertemperatur im Bereich zwischen 1000° C und 1400° C gesintert und anschließend in einer reduzierend wirkenden Gasatmosphäre behandelt werden.

2. Verfahren nach Anspruch 1, dadurch gekennzeichnet, daß das aus technisch reinem Kohlendioxid bestehende oxidierende Gas (5) in gleicher Richtung wie die Grünlinge durch den Ofenraum des Durchlaufsinterofens (2) geführt wird.

3. Verfahren nach Anspruch 1, dadurch gekennzeichnet, daß die reduzierend wirkende Gasatmosphäre (6) aus Wasserstoff besteht, evtl. vermisch mit einem neutralen Gas wie Stickstoff, gegen die Bewegungsrichtung der Grünlinge durch den Durchlaufsinterofen geleitet und zur Einstellung des Restfluorgehaltes mit einem entsprechenden Feuchtigkeitsgehalt versehen wird.

4. Verfahren nach den Ansprüchen 1 bis 3, dadurch gekennzeichnet, daß die Sinterzeit 30 Minuten bei einer Temperatur von 1000° C und 5 Minuten bei einer Temperatur von 1400° C beträgt und längere Sinterzeiten zur Einstellung der Mikrostruktur der Kernbrennstoffkörper vorgesehen werden.

5. Verfahren nach Anspruch 1, dadurch gekennzeichnet, daß im Durchlaufsinterofen (2) die Oxidationszone (5) und die Reduktionszone (R) durch einen Stickstoffstrom voneinander getrennt werden, in dem auch das oxidierende (5) und das reduzierende (6) Gas abgeführt werden.

**Claims**

1. A process for the production of oxidic nuclear fuel bodies having an oxygen-to-metal ratio of 2,0 ± 0,02, by the addition and mixing of nuclear fuel powder having an arbitrary oxygen-to-metal ratio with sintering additions consisting of $U_3O_8$, which act to promote grain growth and to produce a micro-structure, the extrusion of this mixture to form pellets, the transport of these pellets through a continuous-flow sintering furnace in which they are sintered in a sintering atmosphere consisting of

4

technically pure carbon dioxide at a sintering temperature in the range of between 1000° C and 1400° C, and are subsequently treated in a reducing gas atmosphere.

2. A process according to claim 1, characterized in that the oxidising gas (5) consisting of technically pure carbon dioxide is passed through the furnace chamber of the continuous-flow sintering furnace (2) in the same direction as the pellets.

3. A process according to claim 1, characterised in that the reducing gas atmosphere (6) consists of hydrogen, possibly mixed with a neutral gas, such as nitrogen, is passed through the continuous-flow sintering furnace in a direction opposite to that of the pellets, and in order to adjust the residual fluorine content, is provided with an appropriate moisture content.

4. A process according to claims 1 to 3, characterized in that, the sintering time is 30 minutes at a temperature of 1000° C, and 5 minutes at a temperature of 1400° C, and longer sintering times are provided for setting the micro-structure of the nuclear fuel bodies.

5. A process according to claim 1, characterized in that, in the continuous-flow sintering furnace (2), the oxidation zone (5) and the reduction zone (R) are separated from one another by a nitrogen stream into which also the oxidising (5) and the reducing (6) gas are discharged.

**Revendications**

1. Procédé de fabrication de corps combustibles nucléaires à base d'oxydes, ayant un rapport de l'oxygène au métal de 2,0 ± 0,02, par mélange et mixtion de poudres de matières combustibles nucléaires ayant n'importe quel rapport de l'oxygène au métal et d'additifs de frittage en $U_3O_8$ favorisant la croissance des grains et réglant la microstructure, par compression de ce mélange en barreaux de combustible, par transport de ces barreaux de combustible dans un four de trittage continu dans lequel ceux-ci sont frittés dans une atmosphère de frittage constituée de gaz carbonique techniquement pur, à une température de frittage se trouvant dans la plage comprise entre 1000° C et 1400° C, et sont ensuite traités dans une atmosphère gazeuse réductrice.

2. Procédé suivant la revendication 1, caractérisé en ce qu'il consiste à envoyer le gaz oxydant (5) constitué de gaz carbonique technique pur, dans la chambre du four de frittage continu (2), suivant la nême direction que celui du déplacement des barreaux de combustible.

3. Procédé suivant la revendication 1, caractérisé en ce que l'atmosphère gazeuse (6) réductrice est de l'hydrogène, éventuellement mélangé à un gaz neutre comme l'azote, que est envoyé dans le four de frittage en continu suivant le sens inverse au sens du déplacement des barreaux de combustible et qui a une teneur en humidité adéquate pour régler la teneur résiduelle en fluor.

4. Procédé suivant les revendications 1 à 3, caractérisé en ce que le durée de frittage est de 30 minutes à une température de 1000° C, et de 5 minutes à une température de 1400° C, et en ce qu'il est prévu des durées de frittage plus longues pur régler la microstructure des corps combustibles nucléaires.

5. Procédé suivant la revendication 1, caractérisé en ce que, dans le four de frittage en continu (2) la zone d'oxydation (5) et la zone de réduction (R) sont séparées l'une de l'autre par un courant d'azote dans lequel le gaz oxydant (5) et le gaz réducteur (6) peuvent également être évacués.

$N_2$

2

3

−1100°

1100°

$CO_2$

0

5

7

94 % $N_2$

6 % $H_2$

0

6

S

R

A

0012915